**Europäisches Patentamt**

**European Patent Office**

**Office européen des brevets**

(19)

(11) **EP 1 195 835 A2**

(12) **EUROPEAN PATENT APPLICATION**

(43) Date of publication:
**10.04.2002 Bulletin 2002/15**

(51) Int Cl.$^7$: **H01M 10/40**, H01M 4/58

(21) Application number: **01123773.2**

(22) Date of filing: **04.10.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **05.10.2000 JP 2000306877**

(71) Applicant: **SONY CORPORATION
Tokyo (JP)**

(72) Inventors:
• **Takahashi, Kimio**
  **Shinagawa-ku, Tokyo (JP)**
• **Hosoya, Mamoru**
  **Shinagawa-ku, Tokyo (JP)**
• **Miyake, Masami**
  **Shinagawa-ku, Tokyo (JP)**

(74) Representative: **Müller . Hoffmann & Partner
Patentanwälte
Innere Wiener Strasse 17
81667 München (DE)**

(54) **Non-aqueous electrolyte cell and solid electrolyte cell**

(57)     A cell which is not deteriorated in cell characteristics and which maintains a cell shape encapsulated in a laminate film even when overdischarged to a cell voltage of 0V. The cell includes a cathode (2) containing a compound having the formula $Li_xFe_{1-y}M_yPO_4$, where M is at least one selected from the group consisting of Mn, Cr, Co, Cu, Ni, V, Mo, Ti, Zn, Al, Ga, Mg, B and Nb, with $0.05 \leq x \leq 1.2$ and $0 \leq y \leq 0.8$, an anode (3) and a solid electrolyte (4). A cell member comprised of the cathode and the anode, layered together with the interposition of a solid electrolyte, is encapsulated in a laminate film (6).

**FIG.1**

**Description**

BACKGROUND OF THE INVENTION

Field of the Invention

This invention relates to a non-aqueous electrolyte cell and to a solid electrolyte cell. More particularly, it relates to a cathode material and an anode material representing cell components of the non-aqueous electrolyte cell and the solid electrolyte cell.

Description of Related Art

Recently, with drastic progress in the art of electronic equipment, investigations into a rechargeable secondary cell, as a power source usable conveniently and economically for prolonged time, are proceeding briskly. Among typical secondary cells, there are a lead storage cell, an alkali storage cell and a non-aqueous electrolyte secondary cell.

Among the aforementioned secondary cell, a lithium ion secondary cell, as a non-aqueous electrolyte secondary cell, has advantages such as high output or high energy density. The lithium ion secondary cell is made up of a cathode and an anode, each having an active material capable of reversibly doping/undoing at least lithium ions, and a non-aqueous electrolyte (non-aqueous electrolyte solution or solid electrolyte).

As anode active material, use is made in general of metal lithium, lithium alloys, such as Li-Al alloys, lithium-doped electrically conductive high molecular materials, such as polyacetylene or polypyrrole, interlayer compounds, in the crystals of which lithium ions are captured, and carbon materials.

As cathode active material, use is made of metal oxides, metal sulfides or polymers, such as $TiS_2$, $MoS_2$, $NbSe_2$ or $V_2O_5$.

The discharging reaction of the lithium ion secondary cell proceeds as lithium ions are deintercalated into an electrolyte solution at the cathode and are intercalated into the anode active material into the anode active material. In charging, reaction opposite to the charging reaction proceeds, such that lithium ions are interecalated at the cathode. That is, charging/discharging is repeated as the reaction of entrance/exit of lithium ions from the cathode into and from the anode active material occurs repeatedly.

As the cathode active material of the lithium ion secondary cell, $LiCoO_2$, $LiNiO_2$ or $LiMnO_4$ is used because these materials have a high energy density and a high voltage. However, these cathode active materials, containing metal elements of low Clark number in their composition, suffer from high cost and difficulties met in connection with supply in stability. Moreover, these cathode active materials are higher in toxicity and affect the environment significantly. So, there is presented a demand for a novel substitute material usable as a cathode active material.

Proposals have been made for a novel substitute material usable as a cathode active material. A compound having the formula $Li_xFe_{1-y}M_yPO_4$ of the olivinic structure, where M is at least one selected from the group consisting of Mn, Cr, Co, Cu, Ni, V, Mo, Ti, Zn, Al, Ga, Mg, B and Nb, with $0.05 \leq x \leq 1.2$ and $2.0 \leq y \leq 0.8$, may be used as the cathode active material either singly or in combination with other materials. $Li_xFe_{1-y}M_yPO_4$ includes iron, as an inexpensive material plentiful in supply, in its composition, and hence is less costly than any of the aforementioned materials, that is $LiCoO_2$, $LiNiO_2$ or $LiMnO_4$. Moreover, $Li_xFe_{1-y}M_yPO_4$ is lower in toxcity and less affect the environment.

However, if $Li_xFe_{1-y}M_yPO_4$ is used as the cathode active material, and charging/discharging is carried out repeatedly, the charging/discharging capacity is decreased appreciably due to occurrence of inner shorting. Specifically, with a lithium ion secondary cell, employing $Li_xFe_{1-y}M_yPO_4$ as the cathode active material, it is a frequent occurrence that the electrical capacity at the 30th cycle falls to 50% or less of the initial electrical capacity. This is attributable to volumetric changes produced in the cathode and anode materials due to cell reactions occurring in the course of charging/discharging. These volumetric changes are produced in the portions of the cathode and anode materials contributing to the cell reaction. If there are portions of the cathode and anode materials not contributing to the cell reaction, there is applied a stress thereto from the portions subjected to the volumetric changes, that is the portions contributing to the cell reaction. The result is that the active material of the portions of the cathode and anode materials not contributing to the cell reaction become detached from the current collector to cause internal shorting.

If, in the lithium ion secondary cell, the strip-shaped cathode and anode materials are layered and coiled together to form a wound product usable as a cell device, the innermost peripheral portions of the cathode and anode materials of the wound product, facing each other, are of the same polarity, whilst the outermost portions thereof face an exterior material, so that these innermost and outermost portions do not contribute to the cell reaction. In particular, $Li_xFe_{1-y}M_yPO_4$ undergoes the volumetric changes larger than in case of using other materials as the cathode active material, specifically the volumetric changes of approximately 7%, so that a larger stress is applied to the portions of the cathode and anode materials not contributing to the cell reaction thus further increasing the possibility of occurrence of the inner shorting. Thus, optimum cell cyclic characteristics cannot be achieved if $Li_xFe_{1-y}M_yPO_4$ is used as the cathode active material of the cathode material used in the fabrication of the wound product.

On the other hand, in terms of characteristics proper to the active material, the energy density per unit volume of $Li_xFe_{1-y}M_yPO_4$ is lower than that of Co-, Ni- or Mn-based active materials. Consequently, if $Li_xFe_{1-y}M_yPO_4$ is used as the cathode active material, the electrical capacity is smaller than in case of using other active materials for the constant cell volume, whereas, for the same electrical capacity of the cell, the cell is larger in outer size than if a cathode active material other than is used. In both of these cases, no practical merits may be derived.

SUMMARY OF THE INVENTION

It is therefore an object of the present invention to provide a non-aqueous electrolyte cell and a solid electrolyte cell which, with the use of $Li_xFe_{1-y}M_yPO_4$ as a cathode active material, suppresses occurrence of inner shorting to improve cyclic characteristics of the cell and which, in case of preparing a cell of a constant electrical capacity, achieves the reduced size and thickness of the cell and which, in case of preparing a cell of a fixed outer shape, achieves a high cell capacity.

In one aspect, the present invention provides a non-aqueous electrolyte cell including a cathode material having a cathode current collector on which is deposited a cathode active material formed of a compound of an olivinic crystal structure having the formula $Li_xFe_{1-y}M_yPO_4$, where M is at least one selected from the group consisting of Mn, Cr, Co, Cu, Ni, V, Mo, Ti, Zn, Al, Ga, Mg, B and Nb, with $0.05 \leq x \leq 1.2$ and $0 \leq y \leq 0.8$, the compound being used alone or in combination with other materials, an anode material having an anode current collector on which is deposited an anode active material, a separator for separating the cathode material and the anode material from each other and a non-aqueous electrolyte solution. The cathode and anode materials are layered and wound together, with the interposition of the separator, so that the anode and cathode materials are disposed towards an outer periphery and towards an outer periphery, respectively, to form a cell device, which is encapsulated in an exterior material. A current collector exposing portion is provided by collector exposure on a surface facing the exterior material of the cathode material positioned on the radially outermost portion of the cell device or on the surfaces of the facing portions of the anode material lying on the radially innermost portions of the cell device.

In another aspect, the present invention provides a solid electrolyte cell including a cathode material having a cathode current collector on which is deposited a cathode active material formed of a compound of an olivinic crystal structure having the formula $Li_xFe_{1-y}M_yPO_4$, where M is at least one selected from the group consisting of Mn, Cr, Co, Cu, Ni, V, Mo, Ti, Zn, Al, Ga, Mg, B and Nb, with $0.05 \leq x \leq 1.2$ and $0 \leq y < 0.8$, the compound being used alone or in combination with other materials, an anode material having an anode current collector on which is deposited an anode active material and a solid electrolyte. The cathode and anode materials are layered and wound together so that the anode and cathode materials are disposed towards an outer periphery and towards an outer periphery, respectively, to form a cell device, which is encapsulated in an exterior material. A current collector exposing portion is provided by collector exposure on a surface facing the exterior material of the cathode material positioned on the radially outermost portion of the cell device or on the surfaces of the facing portions of the anode material lying on the radially innermost portions of the cell device.

With the non-aqueous electrolyte cell and the solid electrolyte cell, according to the present invention, the radially outermost portions of the cell device, facing the exterior material and hence not contributing to cell reaction, and radially innermost portions thereof, which are of the same polarity and face each other, thus similarly not contributing to cell reaction, are formed as current collector exposing portions where the current collector is exposed due to the non-deposition of the active material. Thus, if charging/discharging is performed repeatedly such that stress is applied to these portions of the cell device not contributing to cell reaction, there is no risk of the active material becoming detached to fall off, with the result that inner shorting is suppressed to improve cyclic characteristics.

Moreover, according to the present invention, since the active material not contributing to cell reaction is not deposited on the current collector, the outer size or thickness of the cell is reduced, or the amount of the active material contributing to the cell reaction can be increased, with the outer shape of the cell remaining unchanged, thus enabling a high electrical capacity.

That is, with the non-aqueous electrolyte cell and the solid electrolyte cell, according to the present invention, the cathode active material formed of a compound of an olivinic crystal structure having the formula $Li_xFe_{1-y}M_yPO_4$, where M is at least one selected from the group consisting of Mn, Cr, Co, Cu, Ni, V, Mo, Ti, Zn, Al, Ga, Mg, B and Nb, with $0.05 \leq x \leq 1.2$ and $0 \leq y \leq 0.8$, is used alone or in combination with other materials. The portions of the cathode and anode materials of the cell device not contributing to the cell reaction are not coated with an active material but permit the current collector to be exposed to suppress inner shorting to maintain optimum cyclic characteristics. Moreover, according to the present invention, having this cell device structure, the electrical capacity may be increased for the outer shape remaining constant, or the cell may be reduced in size and/or thickness for the electrical capacity of the cell remaining unchanged. BRIEF DESCRIPTION OF THE DRAWINGS

Fig.1 is a longitudinal cross-sectional view of a non-aqueous electrolyte cell embodying the present invention.

Figs.2a and 2b illustrate a cathode material forming a cell device of the non-aqueous electrolyte cell embodying the present invention, Fig.2a showing an inner peripheral side and Fig.2b showing an outer peripheral side of the cell device, as a wound coil, respectively.

Figs.3a and 3b illustrate an anode material forming a cell device of the non-aqueous electrolyte cell embodying the present invention, Fig.3a showing an inner peripheral side and Fig.3b showing an outer peripheral side of the cell device, as a wound coil, respectively.

DESCRIPTION OF THE PREFERRED EMBODIMENTS

Referring to the drawings, preferred embodiments of the present invention will be explained in detail. In the present embodiment, a non-aqueous electrolyte cell employing an electrolyte solution as the non-aqueous electrolyte is taken as an example.

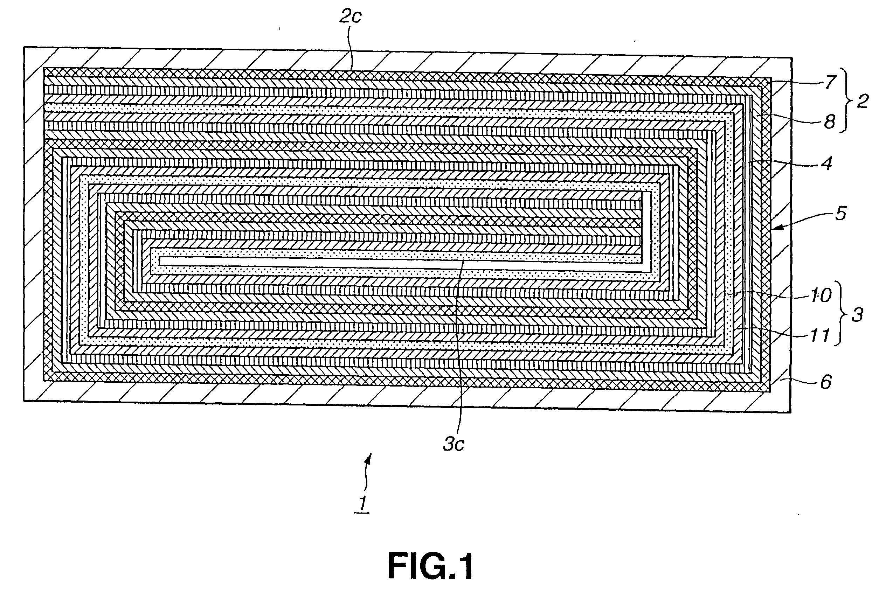

Referring to Fig.1, showing a non-aqueous electrolyte cell 1, a cathode material 2 and an anode material 3 are layered together with a separator 4 in-between and spirally coiled together a plural number of times to yield a cell device 5, which cell device 5 is sealed along with a non-aqueous electrolyte solution in an exterior casing 6.

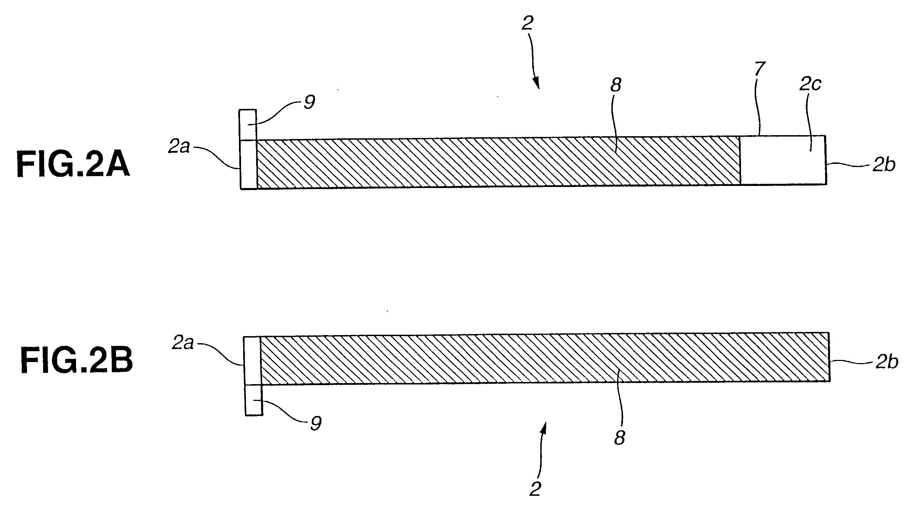

Referring to Figs.2a and 2b, a layer of a cathode active material 8, containing a cathode active material, capable of electrically emitting and occluding lithium, is formed on each magneto-optical disc of a strip-shaped cathode current collector 7. One end of the cathode material 2 is a winding beginning end 2a in forming the cell device 5, described above, with its other end being a winding terminating end 2b. In Figs.2a and 2b, Fig.2a shows an outer peripheral side of the cell device 5 facing outwards in case the cell device 5 has been formed, whilst Fig.2b shows its inner peripheral side facing inwards.

A cathode lead 9 is mounted in the vicinity of the winding beginning end 2aof the cathode material 2. Towards the winding terminating end 2b on the ourer peripheral side of the cathode material 2, there is formed a current collector exposing portion 2c for exposing the cathode current collector 7, without forming the layer of a cathode active material 8.

The cathode current collector 7 may, for example, be an aluminum foil. As the cathode active material, contained in the layer of a cathode active material 8, a compound of an olivinic structure, having the formula $Li_xFe_{1-y}M_yPO_4$, where M is at least one selected from the group consisting of Mn, Cr, Co, Cu, Ni, V, Mo, Ti, Zn, Al, Ga, Mg, B and Nb, with $0.05 \leq x \leq 1.2$ and $2.0 \leq y \leq 0.8$, may be used either singly or in combination with other compound(s). In the present embodiment, a composite material composed of $LiFePO_4$ and a carbon material, which will be explained in more detail subsequently, is used as a cathode active material. In the following description, $LiFePO_4$ isusedas $Li_xFe_{1-y}M_yPO_4$ and a composite material composed of this $LiFePO_4$ and a carbon material is used as a cathode active material.

The composite material composed of $LiFePO_4$ and the carbomn material, that is $LiFePO_4$ carbon composite material, is comprised of numerous grains of the carbon material attached to the surface of the $LiFePO_4$ grains, with the grain size of the carbon material being drastically smaller than that of the $LiFePO_4$ grains. Since the carbon materials exhibit electrical conductivity, the $LiFePO_4$ carbon composite material composed of the carbon material and $LiFePO_4$ is higher in electronic conductivity than a cathode active material composed only of $LiFePO_4$. That is, since the $LiFePO_4$ carbon composite material is improved in electronic conductivity by the carbon particles attached to the surface of the $LiFePO_4$ particles, the capacity proper to $LiFePO_4$ can be derived sufficiently. Thus, by using the $LiFePO_4$ carbon composite material as the cathode active material, a non-aqueous electrolyte cell 1 having high electrical capacity can be realized.

The carbon content per unit weight of the $LiFePO_4$ carbon composite material is desirably not less than 3 wt%. If the carbon content per unit weight of the $LiFePO_4$ carbon composite material is less than 3 wt%, the amount of the carbon particles attached to the surface of the $LiFePO_4$ is not sufficient such that the favorable effect in improving the electronic conductivity cannot be derived sufficiently.

As the carbon material forming the $LiFePO_4$ carbon composite material, such a material where the strength to area ratio A(D/G) of diffraction lines appearing at 1570 to 1590 $cm^{-1}$ to those appearing at 1340 to 1360 $cm^{-1}$ of the number of waves in the Raman spectrum of graphite, abbreviated to Gr, in the Raman spectrometry, is not less than 0.3, is preferably used.

The strength to area ratio A(D/G) is defined herein to be the background-free Raman spectrum strength area ratio A(D/G) of the D peak appearing at the number of waves of 1340 to 1360 $cm^{-1}$ to the G peak appearing at the number of waves of 1570 to 1590 $cm^{-1}$ as measured by Raman spectrometry as shown in Fig.2. The "background-free" is synonymous with freeness from a noisy portion.

Among numerous peaks of the Raman spectrum of Gr, two peaks, namely the G peak appearing at the number of waves of 1570 to 1590 $cm^{-1}$ and the D peak appearing at the number of waves of 1340 to 1360 $cm^{-1}$, are observed, as described above. Of these, the D peak is inherently not derived from the G peak, but is a Raman-inactive peak appearing when the structure is distorted and the structural symmetry has become lower. Thus, it is known that the D peak is a measure of structural distortion, and that the strength area ratio A(D/G) of the D to G peaks is correlated linearly with a reciprocal of the crystallite size La along the a-axis of Gr.

As such carbon material, an amorphous carbon material, such as acetylene black, may preferably be used.

The carbon material having the strength to area ratio A(D/G) of not less than 0.3 may be obtained e.g., by processing such as comminution with a pulverizer. A carbon material having an optional A (D/G) may be obtained extremely readily by controlling the comminuting time.

For example, graphite, as a crystalline carbon material, may have its structure destructed extremely readily by comminution with a powerful pulverizer, such as a planetary ball mill, and is amorphized progressively resulting in increased strength to area ratio A (D/G). That is, by controlling the driving time of the pulverizer, such a carbon material having an optional A (D/G) not less than 0.3 may be produced extremely readily. Thus, on comminution, crystalline carbon materials also may be preferably used.

The powder density ofthe $LiFePO_4$ carbon composite material is preferably not less than 2.2 $g/cm^3$. If the starting materials for synthesis are milled to such an extent that the powder density of the $LiFePO_4$ carbon composite material is not less than 2.2 $g/cm^3$, the composite material is comminuted sufficiently. So, the cathode active material is improved in charging density, thus.yielding a non-aqueous electrolyte cell 1 having a high capacity. On the other hand, since the $LiFePO_4$ carbon composite material is comminuted to satisfy the above-mentioned powder density, the specific surface area of $LiFePO_4$ also may be said to be increased. That is, a sufficient contact area between $LiFePO_4$ and the carbon material may be assured to enable the electronic conductivity to be improved.

If the powder density of the $LiFePO_4$ carbon composite material is less than 2.2 $g/cm^3$, the $LiFePO_4$ carbon composite material is not compressed sufficiently, so that the active material charging ratio at the cathode material 2 may not be improved.

The Bullnauer Emmet Teller (BET) specific surface area of the $LiFePO_4$ carbon composite material is preferably not less than 10.3 $m^2/g$. If the BET specific surface area of $LiFePO_4$ carbon composite material is not less than 10.3 $m^2/g$, the specific surface area of $LiFePO_4$ per unit area can be sufficiently large to increase the contact area of $LiFePO_4$ with the carbon material. The result is the improved electronic conductivity of the cathode active material.

Additionally, the primary grain size of the $LiFePO_4$ carbon composite material is desirably not larger than 3.1 $\mu$m. With the primary grain size of the $LiFePO_4$ carbon composite material of not larger than 3.1 $\mu$m, the specific surface area of $LiFePO_4$ per unit area can be sufficiently large to increase the contact area of $LiFePO_4$ with the carbon material. The result is again the improved electronic conductivity of the cathode active material.

In the present embodiment, the $LiFePO_4$ carbon composite material is used as the cathode active material. However, the present invention is not limited thereto. In the present invention, $LiFePO_4$ by itself may be used as the cathode active material, or a compound having the formula $LiFePO_4$ $Li_xFe_{1-y}M_yPO_4$ and which is different from $LiFePO_4$, where M is at least one selected from the group consisting of Mn, Cr, Co, Cu, Ni, V, Mo, Ti, Zn, Al, Ga, Mg, B and Nb, with $0.05 \leq x \leq 1.2$ and $2.0 \leq y \leq 0.8$, may be used singly or in combination with other materials. These compounds may be enumerated by, for example, $LiFe_{0.2}Mn_{0.8}PO_4$, $LiFe_{0.2}Cr_{0.8}PO_4$, $LiFe_{0.2}Co_{0.8}PO_4$, $LiFe_{0.2}Cu_{0.8}PO_4$, $LiFe_{0.2}Ni_{0.8}PO_4$, $LiFe_{0.25}V_{0.75}PO_4$, $LiFe_{0.25}Mo_{0.75}PO_4$, $LiFe_{0.25}Ti_{0.75}PO_4$, $LiFe_{0.3}Zn_{0.7}PO_4$, $LiFe_{0.3}Al_{0.7}PO_4$, $LiFe_{0.3}Ga_{0.7}PO_4$, $LiFe_{0.25}Mg_{0.75}PO_4$, $LiFe_{0.25}B_{0.75}PO_4$ and $LiFe_{0.25}Nb_{0.75}PO_4$.

As a binder contained in the layer of the cathode active material, any suitable known resin materials, routinely used as binder for the layer of the cathode active material for this sort of the non-aqueous electrolyte cell, may be used.

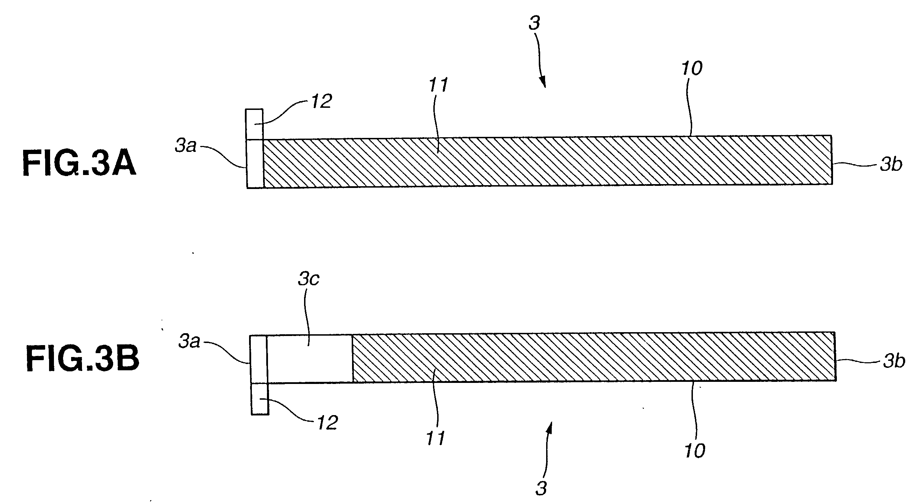

In the anode material 3, as in the cathode material 2, a layer of an anode active material 11 is formed on each major surface of the strip-shaped anode current collector 10. One end of the anode material 3 is a winding beginning end 3a, with its other end being a winding terminating end 3b, in forming a spirally wound cell device 5. In Figs.3a and 3b, Fig.3a shows an outer peripheral side of the cell device 5 facing outwards in case the cell device 5 has been formed, whilst Fig.3b shows its inner peripheral side facing inwards.

An anode lead 12 is mounted in the vicinity of the winding beginning end 3a. In the anode material 3, the layer of an anode active material 11is not formed on the winding beginning end 3a, but a current collector exposing portion 3c is formed for exposing the anode current collector 10.

As the anode current collector 10, a nickel foil, for example, is used. In the layer of an anode active material 11, such a material that is able to dope/undope lithium is used as anode active material. As the anode active material that is able to dope/undope lithium, metal lithium, lithium alloys, lithium-doped electrically conductive high molecular materials, carbon materials or layered compounds, such as metal oxides, may be used. As a binder contained in the layer of an anode active material 11, any suitable known resin materials, routinely used as a binder for the layer of the anode active material for this sort of the non-aqueous electrolyte cell, may be used.

The separator 4 is used for separating the layer of a cathode active material 8 of the cathode material 2 and the layer of an anode active material 11 of the anode material 3 from each other. For the separator, any suitable known material commonly used as the separator for this sort of the non-aqueous electrolyte cell may be used. For example, the separator may be a film of a high molecular material, such as polypropylene. Moreover, in consideration of the relation between the lithium ion conductivity and the energy density, the separator 4 is preferably as thin in thickness as possible. Specifically, the separator may preferably be of a thickness of e.g., not larger than 50 $\mu$m.

As the non-aqueous electrolyte solution, such a solution obtained on dissolving an electrolyte in a non-protonic non-aqueous solvent may be used.

As the non-aqueous solvent, use may be made of, for example, propylene carbonate, ethylene carbonate, butylene carbonate, vinylene carbonate, γ-butyl lactone, sulforan, 1, 2-dimethoxyethane, 1, 2-diethoxyethane, 2-methyl tetrahydrofuran, 3- methyl- 1, 3-dioxolane, methyl propionate, methyl butyrates, dimethyl carbonate, diethyl carbonate, or dipropyl carbonate. In particular, from the perspective of voltage stability, cyclic carbonates, such as propylene carbonate, ethylene carbonate, butylene carbonate orvinylene carbonate, and chained carbonates, such as dimethyl carbonate, diethyl carbonate or dipropyl carbonate, may preferably be used. These non-aqueous solvents may be used either singly or in combination.

The electrolytes dissolved in the non-aqueous solvent may be lithium salts, such as $LiPF_6$, $LiClO_4$, $LiAsF_6$, $LiBF_4$, $LiCF_3SO_3$ and $LiN(CF_3SO_2)_2$. Of these lithium salts, $LiPF_6$ or $LiBF_4$, in particular, are preferably employed.

As the non-aqueous electrolyte cell of the present invention, the non-aqueous electrolyte cell 1 employing a liquid-based electrolyte as the non-aqueous electrolyte is taken as an example in the foregoing embodiment. The present invention is not to be limited to this embodiment but may be suitably applied to the case of employing a solid electrolyte. As the solid electrolyte, an inorganic solid electrolyte, a high molecular solid electrolyte, or a gelated electrolyte, may be used as the solid electrolyte provided that the material used exhibits lithium ion conductivity. The high molecular solid electrolyte is composed of an electrolyte salt and a high molecular compound dissolving it. As the high molecular compound, an ether-based high molecular material, such as poly(ethylene oxide) or an cross-linked product thereof, a poly(methacrylate) ester based high molecular material or an acrylate-based high molecular material, may be used either singly, as a copolymer in the molecules, or as a mixture. In this case, as a matrix of the gelated electrolyte, any of a variety of high molecular materials that may be gelated on absorption of the non-aqueous electrolyte solution may be used. These high molecular materials may be exemplified by, for example, fluorine based high molecular materials, such as poly (vinylidene fluoride), poly (vinylidene fluoride-CO-hexafluoropropylene), ether based high molecular materials, such as poly (ethylene oxide) or cross-linked products thereof, and polyacrylonitrile. Of these, the fluorine based high molecular materials are particularly desirable from the perspective of redox stability. It should be noted that, in a solid electrolyte cell employing a solid electrolyte as non-aqueous electrolyte, an electrolyte layer formed of a solid electrolyte may be provided on at least one surface of each of the cathode material and the anode material, in place of the separator used for separating the cathode material and the anode material from each other, with the cathode and anode materials being layered and coiled together to form the cell device 5 so that the electrolyte layer will be placed between the layers of the cathode active material and the anode active material.

Referring to Fig.1, showing the cell device 5, a cathode material 2 and an anode material 3 are layered together with a separator 4 in-between and spirally coiled together a plural number of times to give a cell device 5. In this cell device 5, the different portions of the cathode material 2 face each other in the innermost peripheral portions, whilst the cathode material 2 faces the exterior casing 6 at the outermost peripheral portions. These sites do not contribute to the cell reaction, such that a stress is applied due to volumetric changes produced during charging/discharging in the portions of the cell device 5 where the cathode material 2and the anode material 3 face each other to contribute to the cell reaction. However, on the winding beginning end 3a of the anode material 3 positioned on the innermost peripheral portion of the cell device 5, the layer of an anode active material 11is not formed, but a current collector exposing portion 3c is formed for exposing the anode current collector 10. Moreover, on the winding terminating end 2b of the cathode material 2, positioned on the outermost peripheral portion of the cell device 5, the layer of the cathode active material 8 is not formed, but a current collector exposing portion 2c is formed for exposing the cathode current collector 7. Thus, if stress is applied due to volumetric changes produced during charging/discharging to the portions of the cell device 5 not contributed to cell reaction and hence not subjected to volumetric changes, there is no risk of the active material becoming detached to fall off to prevent inner shorting otherwise produced in the non-aqueous electrolyte cell 1, thus improving cyclic characteristics.

In addition, there is provided no layer of the active material in the portion of the cell device 5 not contributing to the cell reaction. Thus, with the non-aqueous electrolyte cell 1, the cell device 5 itself is reduced in thickness to realize the small size and a reduced thickness. Moreover, with the non-aqueous electrolyte cell 1, the layer of the active material contributing to the cell reaction is increased in thickness to realize the high electrical capacity.

The exterior casing 6 is used to encapsulate the cell device 5 and the non-aqueous electrolyte solution. For the exterior casing 6, an iron cell can, lined with an inner plating, is used in case the non-aqueous electrolyte solution is used as the non-aqueous electrolyte. If the solid electrolyte is used as the non-aqueous electrolyte, use may be made of a flexible multi-layered laminate film.

The manufacturing method for the above-described non-aqueous electrolyte cell 1 is now explained.

First, a composite material of $LiFePO_4$ and a carbon material, as the cathode active material, is synthesized by a manufacturing method, indicated below.

For synthesizing the cathode active material, $LiFePO_4$ as a starting material for synthesis is kneaded together, milled and sintered. At an optional time point in the course of the mixing, milling and sintering, a carbon material is added to the kneaded starting materials for synthesis. As the $LiFePO_4$ starting materials for synthesis, $Li_3PO_4$, $Fe_3$

$(PO_4)_2$ or its hydrate $Fe_3(PO_4)_2 \cdot nH_2O$ thereof where n denotes the number of hydrates, are used.

In the following, such a case is explained in which lithium phosphate $Li_3PO_4$ and a hydrate $Fe_3(PO_4)_2 \cdot 8H_2O$ thereof, synthesized as explained below, are used as starting materials for synthesis, and in which, after adding a carbon material to these starting materials for synthesis, a number of process steps are executed to synthesize the $LiFePO_4$ carbon composite material.

First, the $LiFePO_4$ starting materials for synthesis and the carbon material are mixed together to form a mixture by way of a mixing step. The mixture from the mixing step is then milled by a milling process, and the milled mixture then is fired by way of a sintering process.

In the mixing process, lithium phosphate and iron phosphate I octahydrate are mixed together at a pre-set ratio and further added to with a carbon material to form a mixture.

This iron phosphate I octahydrate, used as a starting material for synthesis, is synthesized by adding disodium hydrogen phosphate dodecahydrate ($2Na_2HPO_4 \cdot 12H_2O$) to an aqueous solution obtained on dissolving iron phosphate heptahydrate ($FeSO_4 \cdot 7H_2O$) in water and by allowing the resulting mass to dwell for a pre-set time. The reaction of synthesis of iron phosphate I octahydrate may be represented by the following chemical formula:

$$3FeSO_4 \cdot 7H_2O + 2Na_2HPO_4 \cdot 12H_2O \rightarrow Fe_3(PO_4)_2 \cdot 8H_2O + 2Na_2SO_4 + 37H_2O$$

In iron phosphate I octahydrate, as the material for synthesis, there is contained a certain amount of $Fe^{3+}$ from the synthesis process. If $Fe^{3+}$ is left in the material for synthesis, a trivalent Fe compound is generated by sintering to obstruct single-phase synthesis of the $LiFePO_4$ carbon composite material. It is therefore necessary to add a reducing agent to the starting materials for synthesis prior to sintering and to reduce $Fe^{3+}$ contained in the starting materials for synthesis at the time of firing to $Fe^{2+}$.

However, there is a limitation to the capability of the reducing agent in reducing $Fe^{3+}$ to $Fe^{2+}$ by the reducing agent, such that, if the content of $Fe^{3+}$ in the starting materials for synthesis is excessive, $Fe^{3+}$ may not be reduced in its entirety but is left in the $LiFePO_4$ carbon composite material.

It is therefore desirable that the content of $Fe^{3+}$ in the total iron in the iron phosphate I octahydrate be set to 61 wt% or less. By limiting the content of $Fe^{3+}$ in the total iron in the iron phosphate I octahydrate to 61 wt% or less from the outset, single-phase synthesis of the $LiFePO_4$ carbon composite material can be satisfactorily achieved without allowing $Fe^{3+}$ to be left at the time of firing, that is without generating impurities ascribable to $Fe^{3+}$.

It should be noted that, the longer the dwell time in generating iron phosphate I octahydrate, the larger becomes the content of $Fe^{3+}$ in the generated product, so that, by controlling the dwell time so as to be equal to a preset time, iron phosphate I octahydrate having an optional $Fe^{3+}$ can be produced. The content of $Fe^{3+}$ in the total iron in the iron phosphate I octahydrate can be measured by the Messbauer method.

The carbon material added to the starting materials for synthesis acts as a reducing agent for reducing $Fe^{3+}$ to $Fe^{2+}$, at the time of sintering, even if $Fe^{2+}$ contained in iron phosphate I octahydrate as the starting material for synthesis is oxidized to $Fe^{3+}$ by oxygen in atmosphere or due to sintering. Therefore, even if $Fe^{3+}$ is left in the starting materials for synthesis, impurities may be prevented from being generated to assure single-phase synthesis of the $LiFePO_4$ carbon composite material. Moreover, the carbon material acts as an antioxidant for preventing oxidation of $Fe^{2+}$ contained in the starting materials for synthesis to $Fe^{3+}$. That is, the carbon material prevents oxidation to $Fe^{3+}$ of $Fe^{2+}$ by oxygen present in atmosphere or in a firing oven prior to or during sintering.

That is, the carbon material acts not only as an electrification agent for improving the electronic conductivity of the cathode active material but also as a reducing agent and as an antioxidant. Meanwhile, since this carbon material is a component of the $LiFePO_4$ carbon composite material, there is no necessity of removing the carbon material following the synthesis of the $LiFePO_4$ carbon composite material. The result is the improved efficiency in the preparation of the $LiFePO_4$ carbon composite material.

It is noted that the carbon content per unit weight of the $LiFePO_4$ carbon composite material be not less than 3 wt%. By setting the carbon content per unit weight of the $LiFePO_4$ carbon composite material to not less than 3 wt%, the capacity and cyclic characteristics inherent in $LiFePO_4$ can be exploited to its fullest extent.

In the milling process, the mixture resulting from the mixing process is subjected to milling in which pulverization and mixing occur simultaneously. By the milling herein is meant the powerful comminuting and mixing by a ball mill. As the ball mill, a planetary ball mill, a shaker ball mill or a mechano-fusion may selectively be employed.

By milling the mixture from the mixing process, the starting materials for synthesis and the carbon material can be mixed homogeneously. Moreover, if the starting materials for synthesis is comminuted by milling, the specific surface area of the starting materials for synthesis can be increased, thereby increasing the contact area between particles of the starting materials for synthesis to expedite the synthesis reaction in the ensuing sintering step.

Preferably, the mixture containing the starting materials for synthesis is milled so that the grain size distribution of the particles with the particle size not less than 3 μm will be 22% or less in terms of the volumetric integration frequency. By setting the grain size distribution of the starting materials for synthesis as described above, the starting materials for synthesis has a broad surface sufficient to realize surface activity for synthesis reaction. Thus, even if the sintering temperature is low and is below the melting point of the starting materials for synthesis of 600°C, the reaction efficiency is high to permit the $LiFePO_4$ carbon composite material to be synthesized reliably in a single phase.

Also preferably, the milling is carried out so that the powder density of the $LiFePO_4$ carbon composite material will be not less than 2.2 g/cm². By comminuting the starting materials for synthesis so as to yield the aforementioned powder density, the contact area between $LiFePO_4$ and the carbon material can be increased to improve the electronic conductivity of the cathode active material.

Thus, by milling the mixture containing the starting materials for synthesis, it is possible to produce the cathode active material which may realize high capacity non-aqueous electrolyte cell 1.

In the sintering step, the mixture milled in the milling step is sintered. By sintering the mixture, lithium phosphate is reacted with iron phosphate I octahydrate to synthesize $LiFePO_4$.

The synthesis reaction of $LiFePO_4$ may be represented by the following reaction formula:

$$Li_3PO_4 + Fe_3(PO_4)_2 \cdot nH_2O \rightarrow 3\ LiFePO_4 + nH_2O$$

where n denotes the number of hydrates and is equal to 0 for an anhydride. In the above chemical formula, $Li_3PO_4$ is reacted with $Fe_3(PO_4)_2$ or its hydrate $Fe_3(PO_4)_2 \cdot nH_2O$ where n denotes the number of hydrates.

As may be seen from the chemical formula (2), no by-product is yielded if $Fe_3(PO_4)_2$ is used as a starting materials for synthesis. On the other hand, if $Fe_3(PO_4)_2 \cdot nH_2O$ is used, water, which is non-toxic, is by-produced.

Heretofore, lithium carbonate, ammonium dihydrogen phosphate and iron acetate II, as starting materials for syntheses, are mixed at a pre-set ratio and sintered to synthesize $LiFePO_4$ by the reaction shown by the chemical formula:

$$Li_2CO_3 + 2Fe(CH_3COO)_2 + 2NH_4H_2PO_4$$

$$\rightarrow 2\ LiFePO_4 + CO_2 + H_2O + 2NH_3 + 4CH_3COOH$$

As may be seen from the above reaction formula, toxic by-products, such as ammonia or acetic acid, are generated on sintering with the conventional synthesis method for $LiFePO_4$. So, a large-scale equipment, such as gas collector, is required for processing these toxic by-products, thus raising the cost. In addition, the yield of $LiFePO_4$ is lowered because these by-products are generated in large quantities.

According to the present invention, in which $Li_3PO_4$, $Fe_3(PO_4)_2$ or its hydrate $Fe_3(PO_4)_2 \cdot nH_2O$, where n denotes the number of hydrates, is used as the starting material for synthesis, targeted $LiFePO_4$ can be produced without generating toxic by-products. In other words, safety in sintering may be appreciably improved as compared to the conventional manufacturing method. Moreover, while a large-scale processing equipment is heretofore required for processing toxic by-products, the manufacturing method of the present invention yields only water, which is innoxious, as a by-product, thus appreciably simplifying the processing step to allow to reduce the size of the processing equipment. The result is that the production cost can be appreciably lower than if ammonia etc which is by-produced in the conventional system has to be processed. Moreover, since the by-product is yielded only in minor quantities, the yield of $LiFePO_4$ may be improved significantly.

Although the sintering temperature in sintering the mixture may be 400 to 900°C by the above synthesis method, it is preferably 600°C or thereabouts in consideration of the cell performance. If the sintering temperature is less than 400°C, neither the chemical reaction nor crystallization proceeds sufficiently such that there is the risk that the phase of impurities such as $Li_3PO_4$ of the starting materials for synthesis may persist and hence no homogeneous $LiFePO_4$ can be produced. If conversely the sintering temperature exceeds 900°C, crystallization proceeds excessively so that the $LiFePO_4$ particles are coarse in size to decrease the contact area between $LiFePO_4$ and the carbon material to render it impossible to achieve sufficient discharge capacity.

During sintering, Fe in the $LiFePO_4$ carbon composite material synthesized is in the bivalent state. So, in the temperature of the order of 600°C as the synthesis temperature, Fe in the $LiFePO_4$ carbon composite material is promptly oxidized to $Fe^{3+}$ by oxygen in the sintering atmosphere in accordance with the following chemical formula:

$$6LiFePO_4 + 3/2O_2 \rightarrow 2Li_3Fe_2(PO_4)_3 + Fe_2O_3$$

so that impurities such as trivalent Fe compounds are produced to obstruct the single-phase synthesis of the $LiFePO_4$

carbon composite material.

So, inert gases, such as nitrogen or argon, or reducing gases, such as hydrogen or carbon monoxide, are used as the sintering atmosphere, while the oxygen concentration in the sintering atmosphere is prescribed to a range within which Fe in the $LiFePO_4$ carbon composite material is not oxidized, that is to not larger than 1012 ppm (volume). By setting the oxygen concentration in the sintering atmosphere to 1012 ppm (volume) or less, it is possible to prevent Fe from being oxidized even at the synthesis temperature of 600°C or thereabouts to achieve the single-phase synthesis of the $LiFePO_4$ carbon composite material.

If the oxygen concentration in the sintering atmosphere is 1012 ppm in volume or higher, the amount of oxygen in the sintering atmosphere is excessive, such that Fe in the $LiFePO_4$ carbon composite material is oxidized to $Fe^{3+}$ to generate impurities to obstruct the single-phase synthesis of the $LiFePO_4$ carbon composite material.

As for takeout of the sintered $LiFePO_4$ carbon composite material, the takeout temperature of the sintered $LiFePO_4$ carbon composite material, that is the temperature of the $LiFePO_4$ carbon composite material when exposed to atmosphere, is desirably 305°C or lower. On the other hand, the takeout temperature of the sintered $LiFePO_4$ carbon composite material is more desirably 204°C or lower. By setting the takeout temperature of the $LiFePO_4$ carbon composite material to 305°C or lower, Fe in the sintered $LiFePO_4$ carbon composite material is oxidized by oxygen in atmosphere to prevent impurities from being produced.

If the sintered $LiFePO_4$ carbon composite material is taken out as it is cooled only insufficiently, Fe in the $LiFePO_4$ carbon composite material is oxidized by oxygen in atmosphere, such that impurities tend to be produced. However, if the $LiFePO_4$ carbon composite material is cooled to too low a temperature, the operating efficiency tends to be lowered.

Thus, by setting the takeout temperature of the sintered $LiFePO_4$ carbon composite material to 305°C or lower, it is possible to prevent Fe in the sintered $LiFePO_4$ carbon composite material from being oxidized by oxygen in atmosphere and hence to prevent impurities from being generated to maintain the operation efficiency as well as to synthesize the $LiFePO_4$ carbon composite material having desirable cell characteristics with high efficiency.

Meanwhile, the as-sintered $LiFePO_4$ carbon composite material is cooled in a sintering furnace. The cooling method used may be spontaneous cooling or by forced cooling. However, if a shorter cooling time, that is a higher operating efficiency, is envisaged, forced cooling is desirable. In case of forced cooling, it is sufficient if a gas mixture of oxygen and inert gases, or only the inert gases, are supplied into the sintering furnace so that the oxygen concentration in the sintering furnace will be not higher than the aforementioned oxygen concentration, that is 1012 ppm in volume or less.

In the foregoing, the carbon material is added prior to the milling step. Alternatively, the carbon material may also be added after the milling step or after the sintering step.

However, if the carbon material is added after the sintering step, the reducing effect or the oxidation preventative effect during sintering cannot be obtained, such that the addition is useful only for improving the electrical conductivity. Thus, in case the carbon material is added after the sintering step, it becomes necessary to prevent $Fe^{3+}$ from being left over by some other means.

It is noted that, if the carbon material is added after the sintering step, the product synthesized on sintering is not the $LiFePO_4$ carbon composite material but is $LiFePO_4$. So, milling is again applied after the carbon material is added to $LiFePO_4$ synthesized on sintering. By this second milling, the carbon material added is comminuted and hence is more liable to become attached to the surface of $LiFePO_4$. Moreover, by this second milling, $LiFePO_4$ and the carbon material are mixed sufficiently to permit the comminuted carbon material to be attached uniformly to the surface of $LiFePO_4$. So, even in case the carbon material is added after the sintering, it is possible to obtain a product similar to one obtained on addition of a carbon material prior to milling, that is the $LiFePO_4$ carbon composite material, as well as to achieve the effect similar to that described above.

The non-aqueous electrolyte cell I, employing the $LiFePO_4$ carbon composite material, obtained as described above, may be prepared e.g., as follows:

In preparing the cathode material 2, an $LiFePO_4$ carbon composite material, as a cathode active material, and a binder, are dispersed in a solvent to prepare a slurried cathode mixture. The so produced cathode mixture is uniformly coated on a cathode current collector 7 and dried in situ to form a layer of a cathode active material 8 to complete the cathode material 2. The cathode mixture is coated so that a current collector exposing portion 2c will be formed towards the winding terminating end 2b of the cathode current collector 7. As the binder for the cathode mixture, not only any suitable known binder may be used, but also any suitable known binder may be added to the cathode mixture.

In the present embodiment, the $LiFePO_4$ carbon composite material is used as the cathode active material. The present invention, however, is not limited to this embodiment. As the cathode active material, $LiFePO_4$ may be used alone or a compound of an olivinic structure having the formula $Li_xFe_{1-y}M_yPO_4$, but which is different from $LiFePO_4$, where M is at least one selected from the group consisting of Mn, Cr, Co, Cu, Ni, V, Mo, Ti, Zn, Al, Ga, Mg, B and Nb, with $0.05 \leq x \leq 1.2$ and $0 \leq y \leq 0.8$, may be used alone or in combination with other materials. These compounds may be enumerated by, for example, $LiFe_{0.2}Mn_{0.8}PO_4$, $LiFe_{0.2}Cr_{0.8}PO_4$, $LiFe_{0.2}Co_{0.8}PO_4$, $LiFe_{0.2}Cu_{0.8}PO_4$, $LiFe_{0.2}Ni_{0.8}PO_4$, $LiFe_{0.25}V_{0.75}PO_4$, $LiFe_{0.25}Mo_{0.75}PO_4$, $LiFe_{0.25}Ti_{0.75}PO_4$, $LiFe_{0.3}Zn_{0.7}PO_4$, $LiFe_{0.3}Al_{0.7}PO_4$, $LiFe_{0.3}Ga_{0.7}PO_4$, $LiFe_{0.25}Mg_{0.75}PO_4$, $LiFe_{0.25}B_{0.75}PO_4$ and $LiFe_{0.25}Nb_{0.75}PO_4$.

In preparing the anode material 3, an anode active material and a binder are dispersed in a solvent to prepare a slurried anode mixture. The so produced anode mixture is uniformly coated on an anode current collector and dried in situ to form a layer of an anode active material to complete the cathode material 2. The anode mixture is coated so that a current collector exposing portion 3c will be formed towards the winding beginning end 3a of the anode current collector 10. As the binder for the cathode mixture, not only any suitable known binder may be used, but also any suitable known binder may be added to the cathode mixture.

The cathode material 2 and the anode material 3, thus prepared, are layered together, with the separator 4 in-between, an wound a plural number of times to prepare the cell device 5.

A non-aqueous electrolyte solution is prepared by dissolving an electrolyte salt in a non-aqueous solvent.

The cell device 5 is housed in the exterior casing 6 into which the non-aqueous electrolyte solution is charged. A lid is caulked to the exterior casing 6 via a gasket to complete the non-aqueous electrolyte cell 1.

Examples

The present invention is hereinafter explained based on specified experimental results.

Comparative Example 1

First, an $LiFePO_4$ carbon composite material, as an anode active material, and a binder, are dispersed in a solvent to prepare a slurried anode mixture, which then is coated on an anode current collector to a coating thickness on one surface of 60 μm and to a coating length on both surfaces of 30 cm, to prepare an anode material.

The anode active material and the binder were dispersed in a solvent to prepare a slurried anode mixture, which then was coated on the anode current collector to a coating thickness on one side of 45 μm and to a coating length on both sides of 30 cm to prepare an anode mixture.

The cathode and anode mixtures were wound together five turns with the electrolyte layer of 30 μm in between to prepare a cell device having a total thickness of 3.11 mm. This cell device was housed in a cell can 3.6 mm in thickness, 35 mm in width and 60 mm in length and sealed to fabricate a cell. In the cell of the present Comparative Example 1, there is no current collector exposing portion, and portions of the layer of the cathode active material lying on the inner surface of the anode material disposed on the innermost peripheral portion of the cell device face each other, while the layer of the cathode active material lying on the outer surface of the cathode material disposed on the outermost peripheral portion of the device faces the inner surface of the cell can.

Example 1

A cell was prepared under the same conditions as those for the cell of the Comparative Example 1, except that the coating thickness on one surface of the cathode active material will be 64.5 μm, the coating thickness on one surface of the anode active material will be 48.5 μm and the coating length of the cathode active material on the outer side at the time of winding will be 23 cm from the winding beginning end , so that the total thickness of the cell device will be 3.11 mm as in the cell of Comparative Example 1. In the cell of the present Example 1, the portion of the cathode material lying on the radially outermost periphery of the cell device facing the inner surface of the cell can, that is the outer surface towards the winding terminating end of the cathode material, is provided with a current collector exposing portion not coated with the cathode active material.

Example 2

A cell was prepared under the same conditions as those for the cell of the Comparative Example 1, except that the coating thickness on one surface of the cathode active material will be 65 μm, the coating thickness on one surface of the anode active material will be 49 μm and the coating length of the cathode active material on the inner side at the time of winding will be 24 cm from the winding terminating end, so that the total thickness of the cell device will be 3.11 mm as in the cell of Comparative Example 1. In the cell of the present Example 2, the portions of the anode material lying on the radially innermost periphery of the cell device for facing each other, that is the inner surface towards the winding beginning end of the anode material, is provided with a current collector exposing portion not coated with the anode active material.

Example 3

A cell was prepared under the same conditions as those for the cell of the Comparative Example 1, except that the coating thickness on one surface of the anode active material will be 70.5 μm, the coating thickness on one surface of the anode active material will be 53 μm, the coating length of the cathode active material on the outer side at the time of winding will be 23 cm from the winding beginning end, and the coating length of the anode active material on the inner side at the time of winding will be 24 cm from the winding terminating end, so that the total thickness of the cell device will be 3.11 mm as in the cell of Comparative Example 1. In the cell of the present Example 3, the portion of the cathode material lying on the radially outermost periphery of the cell device for facing the inner surface of the cell can, that is the outer surface towards the winding terminating end of the cathode material, and the portion of the anode material lying on the radially innermost periphery of the cell device, that is the inner surface towards the winding beginning end of the cathode material, are provided with current collector exposing portions not coated with the active material.

Example 4

A cell was prepared in the same way as in Example 1, except providing a separator 30 μm in thickness between the cathode and anode materials, in place of the electrolyte layer, and that an electrolyte solution is charged into the cell can.

Comparative Example 2

First, an $LiFePO_4$ carbon composite material, as a cathode active material, and a binder, were dispersed in a solvent to prepare a slurried cathode mixture, which then was coated on an anode current collector to a coating thickness on one surface of 60 μm and to a coating length on both surfaces of 35 cm from the winding beginning end to the winding terminating end, to prepare a cathode material.
An anode active material and a binder then were dispersed in a solvent to prepare a slurried anode mixture, which was then coated on an anode current collector to a coating thickness on one surface of 45 μm and to a coating length of 35 cm on both surfaces.
The cathode and anode materials then were wound six times, with an electrolyte layer of 30 μm, in-between, to fabricate a cell device having a total thickness of 3.71 mm. This cell device was housed in an exterior multi-layered laminate film to prepare a cell. In the cell of the Comparative Example 2, there is no current collector exposing portion. In addition, portions of the layer of the cathode active material lying on the inner surface of the anode material disposed on the radially innermost peripheral portion of the cell device face each other, while the layer of the cathode active material lying on the outer surface of the cathode material disposed on the outermost peripheral portion of the device faces the inner surface of the cell can.

Example 5

A cell was prepared under the same conditions as those for the cell of the Comparative Example 2, except that the coating length of the cathode active material on the outer side at the time of winding is set to 29 cm from the winding beginning end, and that the total thickness of the cell device is set to 3.56 mm. In the cell of the present Example 5, the portion of the cathode material lying on the radially outermost periphery of the cell device facing the inner surface of the cell can, that is the outer surface towards the winding terminating end of the exterior film, is provided with a current collector exposing portion not coated with the cathode active material.

Example 6

A cell was prepared under the same conditions as those for the cell of the Comparative Example 2, except that the coating length of the anode active material on the inner side at the time of winding is set to 30 cm, and that the total thickness of the cell device is set to 3.53 mm. In the cell of the present Example 6, the portions of the anode material lying on the radially innermost periphery of the cell device, that is the inner surface towards the winding beginning end of the anode material, is provided with a current collector exposing portion not coated with the anode active material.

Example 7

A cell was prepared under the same conditions as those for the cell of the Comparative Example 2, except that the coating length of the anode active material on the inner side at the time of winding is set to 29 cm from the winding beginning end, and the coating length of the anode active material on the inner side at the time of winding is set to 30 cm from the winding terminating end, with the total thickness of the cell device being 3.38 mm. In the cell of the present Example 7, the portion of the cathode material lying on the radially outermost periphery facing the inner surface of the exterior film, that is the outer surface of the cathode material towards the winding terminating end of the cathode material, and portions of the radially inner most periphery of the cell device, that is the portions of the inner surface towards the winding terminating end of the anode material, are provided with current collector exposing portions not coated with the active material.

Example 8

A cell was prepared in the same way as in Example 7 except providing cathode and anode materials in an exterior film with a separator 30 μm in thickness, interposed in place of the electrolyte layer between the cathode and anode materials, and charging an electrolyte solution.
The cells of the Comparative Examples 1 and 2 and cells of Examples 1 to 8 were evaluated as to the electrical capacity, outer shape and as to cyclic characteristics.
The results are shown in Table 1.

Table 1

| | electrolyte | current collector exposing portion | number of turns | device thickness (mm) | constant volume exterior material |
|---|---|---|---|---|---|
| Comp. Ex.1 | solid electrolyte | none | 5 | 3.11 | OK |
| Ex.1 | | on radially outer most end of cathode | 5 | 3.11 | OK |
| Ex.2 | solid electrolyte | on radially outer most end of anode | 5 | 3.11 | OK |
| Ex.3 | solid electrolyte | on radially outer most side of cathode + on radially inner most side of anode | 5 | 3.11 | OK |
| Ex.4 | non-aqueous electrolyte | on radially outer most side of cathode + on radially inner most side of anode | 5 | 3.12 | OK |

EP 1 195 835 A2

| Comp. Ex.2 | solid electrolyte | none | 6 | 3.71 | NG |
|---|---|---|---|---|---|
| Ex.5 | solid electrolyte | on radially outer most end of cathode | 6 | 3.56 | OK |
| Ex.6 | solid electrolyte | on radially outer most end of anode | 6 | 3.53 | OK |
| Ex.7 | solid electrolyte | on radially outer most side of cathode + on radially inner most side of anode | 6 | 3.38 | OK |
| Ex.8 | non-aqueous electrolyte | on radially outer most side of cathode + on radially inner most side of anode | 6 | 3.39 | OK |

14

Table 1 (continued)

| | rate of thickness reduction (%) | electrical capacity mAh | increasing ratio (%) | electrical capacity density | increasing ratio (%) | inner shorting ratio (after 300 cycles) (%) |
|---|---|---|---|---|---|---|
| Comp. Ex.1 | 100 | 646 | 100 | 132 | 100 | 28% |
| Ex.1 | 100 | 689 | 107 | 144 | 109 | 4% |
| Ex.2 | 100 | 693 | 107 | 144 | 110 | 7% |
| Ex.3 | 100 | 745 | 115 | 155 | 118 | 0% |
| Ex.4 | 100 | 744 | 115 | 155 | 118 | 0% |
| Comp. Ex.2 | 100 | 751 | 116 | 132 | 100 | 23% |
| Ex.5 | 96 | 752 | 116 | 139 | 106 | 3% |
| Ex.6 | 95 | 751 | 116 | 139 | 106 | 5% |
| Ex.7 | 91 | 753 | 117 | 148 | 112 | 0% |
| Ex.8 | 91 | 752 | 117 | 147 | 112 | 0% |

First, the cells of Comparative Example 1 and Examples 1 to 4 were compared to one another for evaluating the electrical capacities thereof.

With the cell devices of the Examples 1 to 4, as compared to the cell of the Comparative Example 1, in which active materials were coated on the entire current collector surfaces and no current collector exposing portions were provided, the layer of the active materials of the portions contributing to the cell reaction could be increased in thickness, in an amount corresponding to the elimination of the layers of the active materials not contributing to the cell reaction by providing the current collector exposing portions, with the total thickness of the cell devices remaining equivalent to that of the cell of the Comparative Example 1. The result is that the electrical capacity of the cells of the Examples 1 to 4 is approximately 690 mAh to 750 mAh, which is higher than the electrical capacity of the cell of the Comparative Example 1 which is 646 mAh, as shown in Table 1. Specifically, the electrical capacity of the cell of Example 1, the cathode material of which is provided with the current collector exposing portion, is increased to 107%, whilst the electrical capacity of the cell of the Example 2, the anode material of which is provided with the current collector exposing portion, is increased to 107% and that of the Examples 3 and 4, the cathode and anode materials of which are provided with the current collector exposing portions, is increased to 115%.

If, in the device structure of the Comparative Examples, the number of turns is increased to six, the device thickness is equal to that of the Comparative Example 2, specifically, to the total thickness of the cell device shown in Table 1, that is 3.71 mm, so that the cell cannot be held in the cell can 3.6 mm in thickness as used in Comparative Example 1 and Examples 1 to 4. Conversely, with the device structure of the Examples, if the active material is coated to a coating thickness similar to that of Comparative Example 1, and the number of turns is increased to 6, the total device thickness is of the same values as those of Examples 5 to 8. This, with the device structures of the Examples 1 to 8, the total device thickness is less than 3.6 mm, thus indicating that the electrical capacity can be increased by increasing the number of turns.

Meanwhile, since the electrical capacity increase is similar in the Examples 3 and 4, it may be seen that the electrical capacity may be increased by employing the device structure of the Examples 1 to 8 not only in case the cathode material is separated from the anode material by a separator with the use of a liquid electrolyte but also in case the solid electrolyte is used. It may also be seen that similar favorable effects may be achieved in case the cathode and anode materials are separated from each other by an electrolyte layer and the separator.

The cells of the Comparative Example 2 and the Examples 5 and 6 were compared to one another to evaluate the outer shape. It is noted that, since the total thickness of the device is directly reflected on the total cell thickness, if the multi-layered laminate film is used as the exterior material, the outer shape was evaluated based on the thickness of the cell device.

With the cells of the Examples 5 to 8, as compared to the cells of the Comparative Example 2, in which an active material is coated on the entire surfaces of the current collectors of the cathode and the anode, with there being no current collector exposing portion, the total device thickness can be reduced, by providing the current collector exposing portion, for eliminating the layer of the active material not contributing to the cell reaction, as the electrical capacity is maintained at an equivalent value to that of the cell of the Comparative Example 2. The result is that, while the total device thickness of the cell of the Comparative Example 2 is 3.71 mm, the total device thickness of the cell of the Example 5 is 3.56 mm, with the thickness reducing ratio being 96%, the total device thickness of the cell of the Example 6 is 3.53 mm, with the thickness reducing ratio being 95%, the total device thickness of the cell of the Example 7 is 3.38 mm, with the thickness reducing ratio being 91% and the total device thickness of the cell of the Example 8 is 3.39 mm, with the thickness reducing ratio being 91%, thus realizing the reduced cell thickness. In this case, it may be seen that the cells of Examples 5 to 8 are higher in electrical capacity density per unit volume than the cell of the Comparative Example 2, even though the Examples 5 to 8 and the Comparative Example 2 are of approximately equal electrical capacity.

Since the thickness reducing ratio is similar for Examples 7 and 8, it may be seen that the reduction in size and thickness of the cell may be realized by employing the device structure shown in the Examples 1 to 8, no matter whether the cathode and anode materials are separated from each other using a liquid electrolyte or using a solid electrolyte. It follows from this that similar favorable results may be achieved when the cathode and anode materials are separated from each other using both the electrolyte layer and the separator.

100 test cells of each of the Comparative Examples 1 and 2 and the Examples 1 to 8 were prepared and cyclic characteristics thereof were evaluated. Since inner shorting was responsible for the electrical capacity of the test cells after 300 cycles of charging/discharging falling to not higher than 50% of the initial capacity, the inner shorting ratio was found from the "number of inner shorting $\times$ 100/100 (number of test cells)" and the values thus obtained were used to evaluate the cyclic characteristics

In the cells of the Comparative Examples 1 and 2, in which the active material is coated on the entire surface of the current collector, the inner shorting ratio is not less than 20%, whereas, in the cells of the Examples 1, 2, 5 and 6, in which the current collector exposing portion is provided in the cathode material or in the anode material, the inner shorting ratio is decreased to 10% or less. Additionally, with the cells of the Examples 3, 4, 7 and 8, in which the current collector exposing portions are provided in both the cathode and anode materials, the inner shorting ratio is 0%. This may be ascribable to the fact that if, in the electrodes of the cathode and anode materials, the stress due to volumetric changes of the electrode portions contributing to the charging/discharging cell reaction is applied to the electrode portions not contributing to the cell reaction and accumulated, the active material is detached from the current collector to fall off to cause inner shorting in the case of the cells of the Comparative Examples in which the active material is also coated on the stresses electrode portions not contributing to the cell reaction, whereas, in the cells of the Examples 1 to 8, no active material is coated on the stressed portion so that there is no detachment or falling off of the active material responsible for inner shorting. Thus, by not coating the active material on the electrode portion not contributing to the cell reaction, it is possible to prevent inner shorting from being produced to improve cyclic characteristics.

Since the inner shorting ratio is 0% in each of the Examples 3,4,7 and 8, it may be said that, by using the cell structure of the Examples 1 to 8, the cyclic characteristics of the cells can be improved no matter whether the cathode and anode materials are separated from each other by a separator using a liquid electrolyte or using a solid electrolyte. Also, it follows from this that similar favorable results may be derived in case of separating the cathode and anode materials using the electrolyte layer and a separator.

Further, cells of the Examples 9 to 22 were prepared and the outer shape as well as cyclic characteristics thereof were evaluated.

Example 9

A cell was prepared under the same condition as that for the cell of Example 3 except using $LiFe_{0.2}Mn_{0.8}PO_4$ in place of the $LiFePO_4$ carbon composite material.

Example 10

A cell was prepared under the same condition as that for the cell of Example 3 except using $LiFe_{0.2}Cr_{0.8}PO_4$ in place of the $LiFePO_4$ carbon composite material.

Example 11

A cell was prepared under the same condition as that for the cell of Example 3 except using $LiFe_{0.2}Co_{0.8}PO_4$ in place of the $LiFePO_4$ carbon composite material.

Example 12

A cell was prepared under the same condition as that for the cell of Example 3 except using $LiFe_{0.2}Cu_{0.8}PO_4$ in place of the $LiFePO_4$ carbon composite material.

Example 13

A cell was prepared under the same condition as that for the cell of Example 3 except using $LiFe_{0.2}Ni_{0.8}PO_4$ in place of the $LiFePO_4$ carbon composite material.

Example 14

A cell was prepared under the same condition as that for the cell of Example 3 except using $LiFe_{0.25}V_{0.75}PO_4$ in place of the $LiFePO_4$ carbon composite material.

Example 15

A cell was prepared under the same condition as that for the cell of Example 3 except using $LiFe_{0.25}Mo_{0.75}PO_4$ in place of the $LiFePO_4$ carbon composite material.

Example 16

A cell was prepared under the same condition as that for the cell of Example 3 except using $LiFe_{0.25}Ti_{0.75}PO_4$ in place of the $LiFePO_4$ carbon composite material.

Example 17

A cell was prepared under the same condition as that for the cell of Example 3 except using $LiFe_{0.3}Zn_{0.7}PO_4$ in place of the $LiFePO_4$ carbon composite material.

Example 18

A cell was prepared under the same condition as that for the cell of Example 3 except using $LiFe_{0.3}Al_{0.7}PO_4$ in place of the $LiFePO_4$ carbon composite material.

Example 19

A cell was prepared under the same condition as that for the cell of Example 3 except using $LiFe_{0.3}Ga_{0.7}PO_4$ in place of the $LiFePO_4$ carbon composite material.

Example 20

A cell was prepared under the same condition as that for the cell of Example 3 except using $LiFe_{0.25}Mg_{0.75}PO_4$ in place of the $LiFePO_4$ carbon composite material.

Example 21

A cell was prepared under the same condition as that for the cell of Example 3 except using $LiFe_{0.25}B_{0.75}PO_4$ in place of the $LiFePO_4$ carbon composite material.

Example 22

A cell was prepared under the same condition as that for the cell of Example 3 except using $LiFe_{0.25}Nb_{0.75}PO_4$ in place of the $LiFePO_4$ carbon composite material.

The cells of the Examples 9 to 22 were similarly evaluated as to electrical capacity, outer shape and cyclic characteristics. It was verified that the favorable results comparable to those of the Example 3 employing $LiFePO_4$ as the cathode active material.

**Claims**

1. A non-aqueous electrolyte cell comprising:

   a cathode material having a cathode current collector on which is deposited a cathode active material formed of a compound of an olivinic crystal structure having the formula $Li_xFe_{1-y}M_yPO_4$, where M is at least one selected from the group consisting of Mn, Cr, Co, Cu, Ni, V, Mo, Ti, Zn, Al, Ga, Mg, B and Nb, with $0.05 \le x \le 1.2$ and $0 \le y \le 0.8$, said compound being used alone or in combination with other materials;
   an anode material having an anode current collector on which is deposited an anode active material;
   a separator for separating said cathode material and said anode material from each other; and
   a non-aqueous electrolyte solution;
   said cathode and anode materials being layered and wound together, with the interposition of said separator, so that said anode and cathode materials are disposed towards an outer periphery and towards an outer periphery, respectively, to form a cell device, which is encapsulated in an exterior material; wherein
   a current collector exposing portion is provided by collector exposure on a surface facing said exterior material of said cathode material positioned on the radially outermost portion of said cell device or on the surfaces of the facing portions of the anode material lying on the radially innermost portions of said cell device.

2. The non-aqueous electrolyte cell according to claim 1 wherein said anode active material is such an anode active material capable of doping/undoing lithium.

3. The non-aqueous electrolyte cell according to claim 1 wherein said anode active material is an $LiFePO_4$ carbon composite material composed of said compound and a carbon material.

4. The non-aqueous electrolyte cell according to claim 3 wherein the carbon content per unit volume in said $LiFePO_4$ carbon composite material is not less than 3 wt%.

5. The non-aqueous electrolyte cell according to claim 3 wherein the carbon material of said $LiFePO_4$ carbon composite material has a strength to area ratio of a diffraction line appearing at the number of waves of 1570 to 1590 $cm^{-1}$ (G peak) to a diffraction line appearing at the number of waves of 1340 to 1360 $cm^{-1}$ (D peal) of the Raman spectrum in Raman spectrometry, or A(D/G), equal to 0.3 or higher.

6. The non-aqueous electrolyte cell according to claim 3 wherein the powder density of said $LiFePO_4$ carbon composite material not less than 2.2 $g/cm^3$.

7. The non-aqueous electrolyte cell according to claim 3 wherein the Bullnauer Emmet Teller specific surface is not less than 10.3 $m^2/g$.

8. The non-aqueous electrolyte cell according to claim 3 wherein the first-order particle size of said $LiFePO_4$ carbon composite material is not larger than 3.1 μm.

9. A solid electrolyte cell comprising:

a cathode material having a cathode current collector on which is deposited a cathode active material formed of a compound of an olivinic crystal structure having the formula $Li_xFe_{1-y}M_yPO_4$, where M is at least one selected from the group consisting of Mn, Cr, Co, Cu, Ni, V, Mo, Ti, Zn, Al, Ga, Mg, B and Nb, with $0.05 \leq x < 1.2$ and $0 \leq y \leq 0.8$, said compound being used alone or in combination with other materials;
an anode material having an anode current collector on which is deposited an anode active material; and
a solid electrolyte;
said cathode and anode materials being layered and coiled together so that said anode and cathode materials are disposed towards an inner periphery and towards an outer periphery, respectively, to form a cell device, which is encapsulated in an exterior material; wherein
a current collector exposing portion is provided by collector exposure on a surface facing said exterior material of said cathode material positioned on the radially outermost portion of said cell device or on the surfaces of the facing portions of the anode material lying on the radially innermost portions of said cell device.

10. The solid electrolyte cell according to claim 9 wherein a separator is provided between said cathode and anode materials.

11. The solid electrolyte cell according to claim 9 wherein said anode active material is such an anode active material capable of doping/undoing lithium.

12. The solid electrolyte cell according to claim 9 wherein said anode active material is an $LiFePO_4$ carbon composite material composed of said compound and a carbon material.

13. The solid electrolyte cell according to claim 12 wherein the carbon content per unit volume in said $LiFePO_4$ carbon composite material is not less than 3 wt%.

14. The solid electrolyte cell according to claim 12 wherein the carbon material of said $LiFePO_4$ carbon composite material has a strength to area ratio of a diffraction line appearing at the number of waves of 1570 to 1590 $cm^{-1}$ (G peak) to a diffraction line appearing at the number of waves of 1340 to 1360 $cm^{-1}$ (D peak) of the Raman spectrum in Raman spectrometry, A(D/G), equal to 0.3 or higher.

15. The solid electrolyte cell according to claim 12 wherein the powder density of said $LiFePO_4$ carbon composite material not less than 2.2 $g/cm^3$.

16. The solid electrolyte cell according to claim 12 wherein the Bullnauer Emmet Teller specific surface is not less than 10.3 $m^2/g$.

17. The solid electrolyte cell according to claim 12 wherein the first-order particle size of said $LiFePO_4$ carbon composite material is not larger than 3.1 μm.

FIG.1

FIG.2A

FIG.2B

EP 1 195 835 A2

EP 1 195 835 A2

# FIG.3A

# FIG.3B